# EUROPEAN PATENT APPLICATION

(11) **EP 1 293 800 A1**
(43) Date of publication of application: **19.03.2003**
(21) Application number: 01440304.2
(22) Date of filing: 17.09.2001
(51) Int. Cl.: G01S 13/87, G01S 5/02, G01S 5/14

(54) **Method for determining the position of a station in a wireless network, and station adapted for carrying out said method**

(71) Applicant: ALCATEL, 75008 Paris (FR)
(72) Inventor: Carrez, François, 94320 Thiais (FR)
(74) Representative: Urlichs, Stefan, Dipl.-Phys.

(57) **Abstract**

The present invention relates to a method for determining the position of a mobile station (MS-NL), called non-located mobile station, in a wireless network (1) comprising in addition at least one already located station (MS, FS), said method comprising the following steps:
- determining the position of said non-located mobile station (MS-NL) by evaluating signals received from at least said already located station (MS, FS), said signals containing location information of said already located station (MS, FS),
- calculating the position of said non-located mobile station (MS-NL) by a positioning algorithm using said location information.

## Description

The present invention deals with a method for determining the position of a station in a wireless network, and more specifically in a local wireless network also called ad-hoc network, as well as with a station adapted for carrying out said method.

An ad-hoc network is a specific type of wireless network in which a number of base stations (also called hosts) with wireless network interfaces form a temporary network, without the help of any established infrastructure or centralized administration. Ad-hoc networks are usually micro-cellular networks where the use of Bluetooth, HiperLan, 802.11b or the like protocols is well suited. These protocols are well known in the field of wireless communications.

Like any wireless network, an ad-hoc network provides wireless links between mobile users and the base stations, which are distributed over a geographical area.

In such networks, the base stations are often aimed at being mobile. It is indeed desired to be able to move the base stations according to specific requirements or services to be provided to the mobile users, for example within a supermarket or a mall.

Similarly, it is also desired to be able to add or suppress base stations to or from the network as needed.

Determination of the position of the stations is especially required for delivering services (also known as "location dependent services") to the mobile users that are dependent upon the stations geographical position.

For instance, when the base stations are located within a supermarket or a mall, it is often desired to move them from one place to another according e.g. to re-organizations of the presentation of products sold, and it is also desired to provide the mobile users of the network with information, advertisements, and so on according to their location within the supermarket or mall.

Up to now, the known method to indicate to the network the position of the base stations after reconfiguration or installation is to enter manually the base stations positions each time a base station is moved or added.

This solution is not very practical, above all when the configuration of the network is to be changed quite often.

Therefore, the aim of the present invention is to propose a method for determining the position of a station in a radio network that is more practical and flexible than the one of the prior art.

These and other objects of the present invention are obtained by a method for determining the position of a mobile station, called non-located mobile station, in a wireless network also comprising at least one already located station, said already located station (MS, FS) belonging to a first group of stations including stations the position of which is already determined, and said non-located mobile station (MS-NL) belonging to a second group of stations including stations the position of which is not yet determined, said method comprising the following steps:
- determining the position of said non-located mobile station by evaluating signals received from at least said already located station, said signals containing location information of said already located station,
- calculating the position of said non-located mobile station by a positioning algorithm using said location information,
- once the position of said non-located mobile station (MS-NL) has been determined, said station is allocated to said first group of stations until it changes again its position.

Thanks to the method of the invention, the use of mobile or added base stations for the delivery of contextual services to users is more flexible and does not necessitate the manual reconfiguration of the network.

Therefore, networks such as ad-hoc networks can easily be deployed in a lot of various areas.

According to the invention, the positioning algorithm requires the positions of at least n stations, n being equal or greater than 3, to determine the position of a non-located mobile station. The positioning algorithm may be a triangulation algorithm for instance.

Triangulation algorithms are already used in a lot of known networks and easy to implement.

In a specific embodiment of the method of the present invention, said wireless network comprises fixed and mobile stations which exchange signals through wireless links, said mobile stations belonging to at least either of said two groups, and said fixed stations belonging to said first group, said method comprising the following steps:
- said non-located mobile station, belonging to said second group, sends a signal to all stations of the network
- only those stations of said first groupanswer said signal by a positioning signal sent to said non-located mobile station, said positioning signal containing their respective positions within the network
- once said non-located mobile station has received positioning signals from a sufficient number of stations for said positioning algorithm to be applied, said positioning algorithm is applied to determine the position of said non-located station from the positions of said sufficient number of stations.

The method according to the invention is simple and easy to implement.

Thanks to that, the number of stations, fixed or mobile, which positions are determined, is statistically always more or less constant.

According to still another embodiment of the method of the invention, if the non-located mobile station receives positioning signals from more than the sufficient number of stations, the stations which positions are used by the positioning algorithm to determine the position of said non-located mobile station are the ones which positioning signals have the highest reception power.

This allows more precise and optimized positioning.

If the non-located mobile station receives positioning signals from more than the sufficient number of stations, the stations which positions are used by the positioning algorithm to determine the position of said non-located mobile station are the fixed stations in priority.

This allows a more reliable in time positioning.

The present invention also covers a station for use in a wireless network, adapted for carrying out the previous method, and having means for determining its position by evaluating signals received from stations of the network.

A station according to the invention may in addition comprise, when the network supports several program code means corresponding to several services:
- a table associating geographical areas to one of said services
- means for selecting one or more of said services in said table depending on said position
- means for delivering said service to users of said network.

Other characteristics and advantages of the present invention will appear more clearly from the foregoing description of an embodiment of the present invention.

In the drawings:
- Figure 1 is a schematical view of a wireless network for implementing a method according to the invention
- Figure 2 shows a flow chart illustrating the various steps of a method according to the present invention
- Figure 3 schematically represents a station according to the invention.

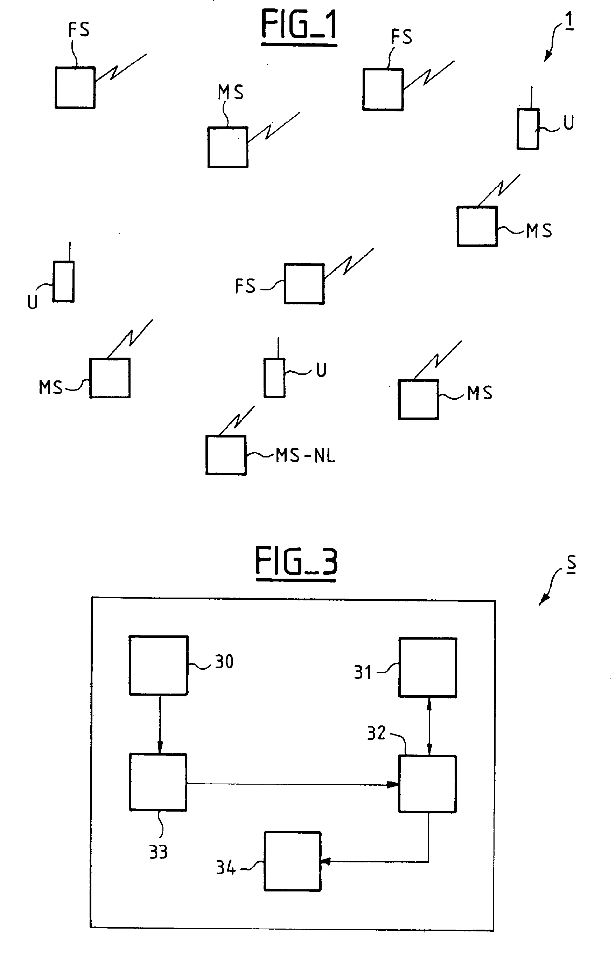

A wireless network 1 using the method of the invention, as represented in figure 1, comprises a plurality of base stations and users U. The base stations are either fixed stations FS, the position of which does not change in time, or mobile stations MS, the position of which changes in time. All the mobile stations MS and fixed stations FS of the network exchange signals together through wireless links, e.g. radio links, using one of the afore-mentioned technologies (Bluetooth, etc..).

Mobile stations MS can be stations which are moved from one position to another, or stations which are added to the network 1, and thereafter become fixed or mobile stations.

The mobile stations MS are subdivided into two groups of stations: a first group including the mobile stations which position is already determined and e.g. stored in a memory of said stations, and a second group including the mobile stations which position is not determined yet. The fixed stations FS belong to the first group.

The respective positions of the mobile stations of the second group need to be determined. This is done according to the method of the invention, provided that the network 1 uses a positioning algorithm. In the present case, the network 1 uses a positioning algorithm based on triangulation, i.e. requiring the knowledge of the position of at least three stations in order to determine the position of a fourth station.

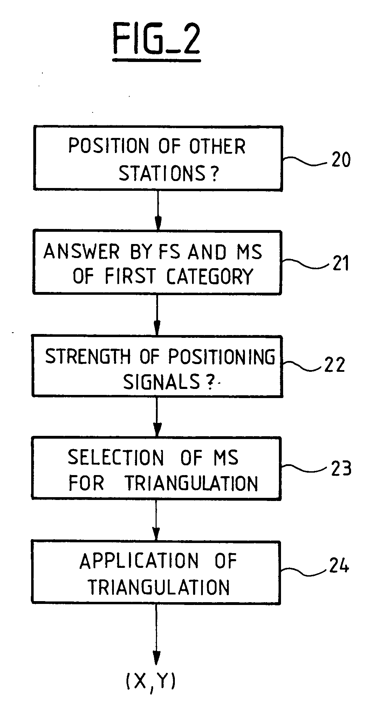

In figure 2, the flow chart represents the various steps of a method according to the invention.

The method of the invention can be applied to the determination of the position of any mobile station MS of the second group mentioned above. It will be described hereunder for the localization of one station called non-located mobile station and indicated in figure 1 as MS-NL.

In a first step 20 (see figure 2) of the method according to the invention, the non-located mobile station MS-NL sends a signal to all the stations of the network 1, either fixed or mobile. In said signal, the non-located mobile station MS-NL asks the other stations to indicate their respective positions.

In a second step 21, only the fixed stations FS and the mobile stations MS of the first group, i.e. the stations having their position already determined (either because it has been stored in their own memory or because another unit of the network provides them with it), send an answer signal, called positioning signal, to MS-NL; these positioning signals provide MS-NL with the respective positions of all the fixed stations FS and all the mobile stations MS of the first group.

In a third step 22, MS-NL determines the strength of the positioning signals, corresponding to the reception power of said signals. This allows both to select the closest fixed stations FS and/or mobile stations MS of the first group, and also to determine the distance between MS-NL and said stations.

In a fourth step 23, if a sufficient number of positioning signals have been received by MS-NL for the triangulation algorithm to be applied, MS-NL selects the three positioning signals which are going to be applied by the triangulation algorithm. In a preferred embodiment of the invention, and if possible, MS-NL selects in priority the positioning signals coming from the fixed stations FS, as those are more reliable in time.

In a fifth step 24, the triangulation algorithm is applied using the positions given in the three selected signals of step 23 in order to determine the position of MS-NL.

After the fifth step 24, the position (x, y) of MS-NL is determined and e.g. stored in a memory of MS-NL, and MS-NL becomes part of the first group of stations.

If, after the third step 22, the number of positioning signals received is not enough for the positioning algorithm to be applied, i.e. if it is less than three, the method of the invention starts again with step 22 until a sufficient number of answers is received by MS-NL.

A station S adapted for carrying out the method of the present invention is schematically shown in figure 3.

The station S comprises:
- means 30 for determining its position by evaluating signals received from other stations of the network
- program code means 31 corresponding to services to be delivered to users of the network
- a table 32 associating geographical areas to one of the services
- means 33 for selecting one or more of the services in table 32 depending on the position of the station S
- means 34 for delivering the service to users of the network.

Of course, the present invention is not limited to the embodiment described above.

As already mentioned, the method of the present invention can be applied either for determining the position of a base station that has been moved and which position has therefore changed, or for determining the position of a base station that has been added to the network.

The base station which position has been determined according to the method of the invention can thereafter become a fixed station (i.e. it is decided it will never be moved) or a mobile station, according to the needs of the network.

For the sake of reliability, it is preferred that the mobile stations of the first group check their positions at regular intervals, e.g. by sending signals to the other stations similar to the ones sent by the non-located mobile stations. As the mobile stations can be moved quite often, this ensures better reliability of the method of the invention.

It is also to be understood that the method of the invention can be applied to any type of wireless network where there is a need to determine the position of the stations thereof.

Besides, the positioning algorithm used in the network may be any type of known positioning algorithm other than the ones based on triangulation.

In addition, the network can be a very simple one only including base stations and users. In such a case, the position of each station is determined or to be determined by the base stations themselves and stored in their memory.

Otherwise, the network can be of a more complex type with at least one additional layer on top of the base stations, in which case it is also possible to store the positions of the base stations in a management unit of the network linked to the base stations (and also as well in the base stations themselves if needed).

At last, any modification of the invention that is within the reach of the man skilled in the art is also covered by the present invention.

## Claims

1. Method for determining the position of a mobile station (MS-NL), called non-located mobile station, in a wireless network (1) also comprising at least one already located station (MS, FS), said already located station (MS, FS) belonging to a first group of stations including stations the position of which is already determined, and said non-located mobile station (MS-NL) belonging to a second group of stations including stations the position of which is not yet determined, said method comprising the following steps:
• determining the position of said non-located mobile station (MS-NL) by evaluating signals received from at least said already located station (MS, FS), said signals containing location information of said already located station (MS, FS),
• calculating the position of said non-located mobile station (MS-NL) by a positioning algorithm using said location information,
• once the position of said non-located mobile station (MS-NL) has been determined, said station is allocated to said first group of stations until it changes again its position.

2. Method according to claim 1 **characterized in that** said positioning algorithm requires the positions of at least n stations, n being equal or greater than 3, to determine the position of a non-located mobile station (MS-NL).

3. Method according to claim anyone of claims 1 or 2, **characterized in that** said positioning algorithm is a triangulation algorithm.

4. Method according to anyone of claims 1 to 3, **characterized in that** said wireless network (1) comprises fixed (FS) and mobile (MS, MS-NL) stations which exchange signals through wireless links, said mobile stations (MS, MS-NL) belonging at least to either of said two groups, and said fixed stations belonging to said first group, said method comprising the following steps:
• said non-located mobile station (MS-NL), belonging to said second group, sends (20) a signal to all stations of the network
• only those stations of said first group answer (21) said signal by a positioning signal sent to said non-located mobile station, said positioning signal containing their respective positions within the network
• once said non-located mobile station has received (23) positioning signals from a sufficient number of stations for said positioning algorithm to be applied, said positioning algorithm is applied (24) to determine the position of said non-located station from the positions of said sufficient number of stations.

5. Method according to claim 4, **characterized in that** if the non-located mobile station receives positioning signals from more than said sufficient number of stations, the stations which positions are used by the positioning algorithm to determine the position of said non-located mobile station are the ones which positioning signals have the highest reception power.

6. Method according to anyone of claim 4 or 5, **characterized in that** if the non-located mobile station receives positioning signals from more than said sufficient number of stations, the stations which positions are used by the positioning algorithm to determine the position of said non-located mobile station are said fixed stations in priority.

7. Station (S) for use in a wireless network and adapted for carrying out the method according to anyone of claims 1 to 6, **characterized in that** it comprises means (30) for determining its position by evaluating signals received from stations of the network.

8. Station according to claim 7 **characterized in that** it further comprises, when said network supports several program code means corresponding to several services:
• a table (32) associating geographical areas to one of said services
• means (33) for selecting one or more of said services in said table depending on said position
• means (34) for delivering said service to users of said network.
